# EUROPEAN PATENT SPECIFICATION

(11) **EP 2 729 235 B1**
(45) Date of publication and mention of the grant of the patent: **05.09.2018**
(21) Application number: 12737913.9
(22) Date of filing: 03.07.2012
(51) Int. Cl.: B01D 53/28, B01J 20/04

(54) **ENCAPSULATED WATER ABSORBING COMPOSITION**
EINGEKAPSELTE WASSERABSORBIERENDE ZUSAMMENSETZUNG
COMPOSITION ENCAPSULÉ ABSORBANT L'EAU

(30) Priority: 04.07.2011 EP 11075158
(43) Date of publication of application: 14.05.2014
(73) Proprietor: Nederlandse Organisatie voor toegepast- natuurwetenschappelijk onderzoek TNO, 2595 DA 's-Gravenhage (NL)
(72) Inventor: EVERSDIJK, Jacobus, NL-2628 VK Delft (NL); PAPEN-BOTTERHUIS, Nicole Ellen, NL-2628 VK Delft (NL); WIJPKEMA, Aike Wypke, NL-2628 VK Delft (NL)
(74) Representative: V.O.
(86) International application number: PCT/NL2012/050470
(87) International publication number: WO 2013/006051

(56) References cited:
- EP-A2- 1 288 251
- WO-A1-01/08784
- WO-A1-2005/087364
- DE-A1-102004 054 553
- DE-A1-102006 018 872
- US-A- 2 638 179
- US-B1- 6 387 970

## Description

### Field of the invention

The present invention relates to the field of water absorbing materials, or desiccants. In particular, the invention relates to a water absorbing composition, a method to produce said water absorbing composition and the use thereof. Further, the present invention relates to an article comprising the absorbing composition.

### Background of the invention

Drying agents are widely used in the fields where it is desired to remove moisture from the environment, such as in air conditioning, industrial processes but also in clothes, consumer electronics, toys and pharmaceutical preparations.

Several groups of drying agents are known. Moisture can be absorbed by hygroscopic salts such as calcium sulfate, calcium chloride, or by hygroscopic fluids such as glycols. Also compounds chemically reacting with water vapour can be used. Finally, water can also be removed from a gas by cooling the gas so that the water condenses.

Often hygroscopic salts are used to absorb moisture from the air. These salts may be regenerated after use, that is, the absorbed moisture is at least partially removed from the salt by exposing it to a high temperature or to low humidity conditions.

However, hygroscopic salts having a high water absorbing capacity are often deliquescent. Deliquescent materials dissolve in the water they absorb, thereby forming a liquid solution. Therefore, these materials usually loose some of the absorbing speed after regeneration due to the formation of clumps. At the same time, deliquescent materials are poorly immobilised on a material as these would leak out after water absorption.

JP 61238320 teaches a dehumidifying cooling agent, which can be placed in a mattress, particularly in the hollow parts formed by sewing sheets of a water vapour permeable water-proof cloth. The mattress thus provides for sweat absorption and cooling during sleeping. The dehumidifying cooling agent is an inorganic salt or organic substance having a hygroscopic speed of 2x10⁻³ g/(cm² hr) or more and an endothermic quantity of 10 cal/g or more, for example, ammonium nitrate, potassium thiocyanate or urea.

A disadvantage of the above drying composition is that it is poorly regenerated. Once the salt has absorbed moisture and is then regenerated by drying, it becomes clumpy and will absorb moisture more slowly. Also the regeneration of such salt will be slower.

Hence, there exists a desire to provide a drying agent that can be regenerated without losing the water absorbing capacity and speed. Moreover, the drying agent should have a high water absorbing capacity and be easily immobilised on a support without danger to leak out during water absorption.

EP 1288251 discloses a desiccant package comprising solid water absorbing particles of one or more materials disposed in a moisture-permeable container. DE 102006018872 describes a moisture-regulating packaging material containing a polymer matrix with cavities wherein moisture regulating agent is dispersed. This document does not disclose the polymeric materials of claim 1.

### Summary of the invention

In order to better address one or more of the foregoing desires, the present invention, in one aspect, presents a water absorbing composition as defined in claim 1.

In another aspect, the invention provides a method to produce the water absorbing composition, wherein a solution comprising the deliquescent material and a solution comprising the polymeric material are combined and spray-dried.

In yet another aspect, the invention pertains to an article comprising the water absorbing composition integrated in a fibrous material.

In a still further aspect, the invention pertains to the use of the composition to dehumidify the air near human or animal skin. Also disclosed is the use of the water absorbing material in drying or dehumidifying of human skin, clothes including protective clothes, food, pharmaceutical preparations.

### Description of the drawings

Figure 1 shows the water uptake of KSCN encapsulated in ethylcellulose in various ratios. The water uptake experiment is repeated three times for each sample, wherein after each experiment the material is regenerated in an oven. The three bars correspond from left to right to the 1st, 2nd and 3rd experiments, respectively.
Figure 2 shows the water uptake in grams (g) water per grams (g) powder of encapsulated KSCN as a function of time.
Figure 3 shows the added heat on a heating plate as a function of time for an article according to the invention (top) and a reference sample (bottom).

### Detailed description of the invention

In a broad sense, the invention is based on the insight that the regeneration of deliquescent water absorbing agents can be improved by encapsulation of those in a polymer matrix.

In the present invention, under water absorbing material any kind of material is meant that is able to attract and hold water and the composition comprises a hygroscopic material. Hygroscopic materials, as used in this description, are those materials with a maximum absorption of more than 10 wt.% of water while stored in a climate box at a relative humidity (RH) of 90% and 25°C until equilibrium. Water absorption by the material can take place through any known mechanism, such as absorption, adsorption or capillary attraction. All these mechanisms are covered by the term "absorption" in the present description.

The water absorption used in the present invention should be reversible so that the absorbent can be regenerated by drying at an elevated temperature or by subjecting it to an atmosphere with a lower humidity. An example of these conditions is heating at 40-50°C and/or lowering of the relative humidity to 40%. Therefore, the water absorbing composition according to the invention is regenerable.

The water absorbing material for use in the present invention is preferably solid at room temperature. Examples of suitable solid, water absorbing materials are hygroscopic inorganic materials such as inorganic salts and bases, and low molecular weight organic hygroscopic materials such as urea.

The hygroscopic material is further deliquescent. Deliquescent materials have the ability to attract large amounts of water from the atmosphere when exposed to it. Because deliquescent materials dissolve in the water they absorb, they form a liquid solution.

Although the absorbing material is deliquescent, it has a critical relative humidity of 45-97% at 25°C. The critical relative humidity (CRH) of a material is defined as the relative humidity of the surrounding atmosphere (at a certain temperature) at which the material begins to absorb water vapour from the atmosphere and below which it will not absorb the atmospheric water vapour. For deliquescent materials, when the humidity of the atmosphere is equal to or is greater than the critical relative humidity of the material, it will take up water until all of the material is dissolved to yield a saturated solution. Thermodynamically, the condition for the critical relative humidity is that the partial pressure of the water vapour in the air is equal to the vapour pressure (aqueous tension) of the water in the saturated solution of the salt.

Critical relative humidity is determined according to the conventional powder absorption method described in Cui, F. (Ed.), 2003, Pharmaceutics, 5th ed. People's Health Press, Beijing, p. 301. In short, the powder moisture absorption method measures the CRH as following: a sample powder is weighed into weight bottles and the bottles are placed in a number of desiccators, which contain a series of saturated salt solutions to generate desired levels of relative humidity. The weight change of each sample within a given time is determined. Then the moisture absorption isotherm is obtained by plotting the rate of weight change vs. environmental relative humidity, and the relative humidity at the turning point in the curve is the CRH of the sample.

In the present invention, the water absorbing material has a CRH in the range 45-97% and particularly preferably in the range 65-85% at 25°C. In this way the water absorbing material begins to work as a dehumidifier only above a certain threshold, that is, only when the relative humidity is too high, while being inactive at an elevated humidity that is still under the CRH. A higher CRH provides for a better and easier regeneration of the water absorbing material. Deliquescent water absorbing materials with a CRH between 5 and 97% at 25°C are, *e.g*., calcium nitrate, ammonium nitrate, sodium nitrate, urea, ammonium chloride, ammonium sulphate, diammonium phosphate, potassium chloride, potassium nitrate, mono ammonium phosphate, mono calcium phosphate, potassium sulphate, potassium thiocyanate, ammonium thiocyanate, sodium thiocyanate. Also mixtures of these materials are suitable.

In a preferred embodiment, the water absorbing material is a compound or a mixture of compounds, and preferably a salt or a mixture of salts, that endothermically dissolves in water. The dissolution of such salts is associated with an energy withdrawal, which contributes to an additional temperature decrease in the environment. The use of these salts allows to simultaneously cool and dehumidify the air or an object in the environment. Examples of suitable endothermic dissolving salts are NH₄CNS, NH₄NO₃, KCNS, CsI, NaClO₄.H₂0, N(CH₃)₄Br, CsCl, NaCNS, NaClO₄ and AgClO₄.

Preferably, the water absorbing material has a water absorbing capacity of at least 50 wt.% based on the dry weight of the absorbing material. More preferably, the water absorbing capacity of the material is at least 100 wt.% and yet more preferably, in the range 200-1,000 wt.%, or 2-10 times its weight.

According to the present invention, the water absorbing material is encapsulated in a matrix of a polymeric material. Encapsulation means that the absorbent may form a core covered with a shell of the encapsulation material and be in a particulate form, or that the particles of the absorbing material are dispersed, or immobilised, in the polymer matrix of the encapsulation material. In the latter case, the encapsulated material can also have a form of a sheet or a layer. The particular structure of the encapsulated material may depend on the ratio of the amounts of the absorbent to the encapsulation material.

The encapsulation materials suitable for the present invention are polymeric, *i.e.*, comprising one or more polymers. Polymers are macromolecules comprising repeating units, which can be of one (homopolymers) or more (interpolymers) sorts. In the present invention, homopolymers, interpolymers and mixtures of those can be used, of both natural and synthetic nature.

Preferably, the polymers used in the present invention have a low water absorption capacity themselves. The polymers should, however, be permeable for water vapour and impermeable for liquid water and especially for salt ions in order to allow the encapsulated composition effectively absorb and hold water vapour. In a preferred embodiment, the polymeric material has a water vapour permeability of at least 1,000 x 10⁻¹³ cm^{3*}cm/(cm^{2*}s^{*}Pa) and, more preferably, at least 4,000 x 10⁻¹³ cm^{3*}cm/(cm^{2*}s^{*}Pa) at 0°C, 1 atm. Good results are achieved in the range from 6,000 to 40,000 x 10⁻¹³ cm^{3*}cm/(cm^{2*}s^{*}Pa) at 0°C, 1 atm. The water vapour permeability can be determined as described in Polymer Handbook, 4th edition, Wiley, New York (1999), Chapter Permeability and Diffusion Data (by S. Pauly), pp. VI/543-VI/562. In an alternative embodiment, the water vapour permeability of the polymeric material is higher or equal to the water vapour permeability of poly(isoprene) as measured by the ASTM E96 Water method.

The polymers are, poly(ethyl)methacrylate" polysiloxane (vulcanised), , methylcellulose, ethylcellulose, cellulose acetate, cellulose nitrate, poly(oxy-2,6-dimethyl-1,4-phenylene), or a copolymer of these, or a mixture of these or the polymer is cellulose or a cellulose derivative. Very good results are achieved with ethylcellulose. This material combines a good water vapour diffusion and a good liquid water barrier and ion barrier. Furthermore, it has a good processability and can readily be applied, *e.g*., in spray drying techniques.

The encapsulated composition according to the invention preferably comprises from 10 to 90 wt.% of the water absorbing material, and more preferably from 40 to 85 wt.%. Yet more preferably, the water absorbing material is present in an amount of 55-70 wt.% in the composition of the invention. The encapsulated composition can be in a granulate form, or in the form of a film. In the granulate form, the particles preferably have a particle size in the range 10-500 micron, more preferably, in the range 10-100 micron and yet more preferably, in the range of 20-50 micron.

Without wishing to be bound by any theory, it is believed by the inventors that the encapsulation of the water absorbing material in a polymer matrix according to the invention prevents the absorbent and absorbed moisture from leaking out while maintaining excellent absorbing properties. The present composition further has an advantage that the encapsulated absorbent does not become sticky and does not form lumps when heated during a regeneration cycle. Moreover, the absorbent maintains its high absorbing speed after several regeneration cycles. The loss in absorbing speed in the present case can be as low as not more than 10% after 10 regeneration cycles.

In a further aspect, the present invention relates to a method of the production of the composition according to the invention, wherein a solution comprising the deliquescent material and a solution comprising the polymeric material are combined and spray-dried.

In this method a solution comprising both the water absorbing material and the encapsulation material is spray-dried. In a typical procedure, by spraying a solution through a pressure nozzle, a spray jet is created comprising small sized droplets. These droplets are contacted with a heated air flow, during which process the solvent evaporates. After the evaporation stage the resulting microcapsules are transported with the air flow into a separation unit (filter or cyclone) where they can be collected.

In the present invention, the water absorbing material to be encapsulated is dissolved in a first solvent, which is preferably water, while the encapsulating material is dissolved in a second solvent, which is miscible with the first solvent. The first and second solvents can be different, or the same. The resulting solutions are combined to form a solution comprising both the water absorbing material and the encapsulating material, which is then (spray-)dried. Upon (spray) drying, preferably a homogenous film material or particles are formed wherein the absorbing material is included. Particularly preferred is the embodiment, wherein ethylcellulose is used to encapsulate a hygroscopic salt or a mixture of salts. In this case, an alcohol such as ethanol is preferably used to dissolve ethylcellulose, while the absorbing material is dissolved in water.

In a further aspect, the present invention relates to an article comprising the composition of the invention integrated in a fibrous material. Typical examples of such materials are woven fabrics, knitted fabrics, non-wovens, multilayer fabrics, fibres, *etc.* The absorbing composition can thus be contained inside fabrics (between yarns and fibres) or between fabric layers. The absorbing composition is preferably evenly distributed over the surface of the carrier material, within a two- or three-dimensional structure. This results in a higher specific surface of the absorbing material and, as a result, a faster absorbance. Also, the absorbing material stays immobilised even after intensive movements. Preferably, the absorbing composition is dispersed in or on non-woven cloths. More preferably, polyester non-wovens are used.

The material, wherein the absorbing composition is integrated, is a fibrous material and should be permeable for water vapour and should allow water vapour to pass through the pores or compartments of the material in order to reach the absorbing composition. At the same time, the absorbing composition is firmly retained within the material so as to prevent the inhomogeneous distribution or even loss of the absorbent.

The article comprising the absorbing composition can be used to dehumidify air, gas mixtures, in closed or open containers. However, most advantageously the invention can be used for dehumidifying the air near human (or animal) skin. In this way the water vapour is removed from the air making it possible for the skin to sweat and consequently be cooled. Therefore, in a preferred embodiment, the article comprising the absorbing composition is a clothing for covering human body.

In a yet more preferred embodiment, the article is a personal protection equipment such as protective clothing. Examples are protection vests, suits, overalls, trousers, motorcycle safety clothing, industrial clothing. Especially preferred are protective clothing that are poorly or not permeable for fluids or other hazards from outside and at the same time poorly or not permeable for water vapour (from inside). Wearing of such clothing is associated with discomfort of a human body since the moisture near the human skin cannot evaporate because the air inside the clothing is saturated with water vapour. By applying the absorbing composition integrated in a porous structure close to the skin, such as on the interior of a protective clothing, water vapour from inside the clothing will be absorbed by the absorbing composition resulting in a decrease of the water vapour pressure inside the clothing. This allows the evaporation of sweat from the human skin and further results in an overall cooling effect of the human body.

Since the absorption of water is also associated with an overall withdrawal of heat, the skin or the air layer near the skin under the protective clothing is simultaneously dried and cooled. The cooling effect can further be increased by the use of endothermic dissolving compounds as the absorbing material. The absorbing composition and the article comprising it can therefore be advantageously used to delay the increase of the body temperature up to the heat shock point by delaying the time to reach the maximum water vapour pressure within clothing.

The personal protection equipment article according to the invention has a further advantage that the water vapour is only absorbed when a threshold relative critical humidity is reached. The CRH of the absorbing material used is in the range 45-97% and particularly in the range 65-85%. Good results are obtained when the CRH is above 70%. In this case the threshold is relatively high and the water absorbing material only begins to absorb water if the humidity becomes too high and a risk of overheating occurs. In other cases, the absorbing composition is inactive and thus does not loose absorbing power.

Another advantage of the personal protection equipment article according to the invention is that it is capable of absorbing of large amounts of water, such as 200-1,000 gram water vapour from sweat per hour. It is therefore particularly suitable in combination with cloths impermeable for fluids and water vapour such as industrial protection cloths, protection vests, *etc.* Since the absorbing composition is integrated in a fabric or a porous structure such as foam, it stays immobilized even after intensive movements. The article is further easily regenerated, *e.g*., at normal room conditions, such as at a relative humidity of 40-50%.

In yet a further aspect, the present invention concerns the use of the absorbing composition for in protective clothing to dehumidify the air near human skin. Nevertheless, the composition can also be used to dehumidify air in air conditioning, industrial processes, (protective) clothes, consumer electronics, pharmaceutical preparations and food preparations.

The invention will now be illustrated in the following, non-limiting examples. All percentages and ratios are by weight unless otherwise stated.

### Example 1 Performance test method

The actual cooling effect of the encapsulated salts is measured with a following test set-up developed in order to simulate the effect of a human body ('Heating plate'). In addition, the water uptake of the encapsulated salt has been measured directly in a climate chamber.

### Heating plate

- A thermoregulating plate is simulating the thermoregulating human body. The temperature is kept at 35 °C during the measurements. The heat necessary for this is being measured: the more heat necessary, the higher the cooling capacity of the encapsulated salt system.
- On top of this plate, a wet cloth is put, simulating the sweating skin.
- In between the skin and the clothing a space of, on the average, 1 cm is present. This space will be simulated with a 'spacer'.
- On top of this spacer, the encapsulated absorbing system is put.
- The encapsulation system is covered by an impermeable foil, to simulate the impermeable work clothing or personal protection equipment.
- The whole system is placed in a chamber with a temperature of 20°C.

### Climate chamber

The water uptake and leakage of the encapsulated material have been tested in a climate chamber. The temperature in this climate chamber can be increased to 80°C and moisture content can be varied. For the experiments with the capsules the temperature was kept at 35°C and the relative humidity at 90% in order to simulate the conditions near the body underneath non-permeable clothing.

### Regeneration

Regeneration is the drying of the salt after water vapour uptake. If a material can be completely regenerated, this means that the water vapour can be (easy) removed without changing the original properties of the salt. After regeneration the material should still have its capacity to take up the water vapour. Regeneration tests took place in an oven at 60°C.

### Example 2 Preparation of encapsulated salt

In this example KSCN (Sigma Aldrich 20,779-9) was encapsulated with ethylcellulose (Aldrich 200646) by spray drying using ethanol (absolute (dehydrated), Biosolve). Ethylcellulose was first dissolved in ethanol, followed by the addition of an aqueous solution of a hygroscopic salt KSCN. The resulting solution was spray-dried to obtain KSCN encapsulated in ethylcellulose. The following compositions of the capsules were prepared:
30% KSCN : 70% Ethylcellulose,
50% KSCN : 50% Ethylcellulose,
60% KSCN : 40% Ethylcellulose,
70% KSCN : 30% Ethylcellulose.

An amount of the material was kept in a climate chamber for 120 min at 35 °C and 90 %RH. Each 15 minutes the weight increase due to water uptake was measured. The total water uptake per gram of salt was calculated for all prepared samples, see Table 1.

**Table 1.**

| | Water uptake [g / 1 g salt] | Water uptake [g/ 1 g capsules] |
|---|---|---|
| 30% KSCN | 2.38 | 0.72 |
| 50% KSCN | 2.50 | 1.24 |
| 60% KSCN | 2.53 | 1.52 |
| 70% KSCN | 2.02 | 1.42 |

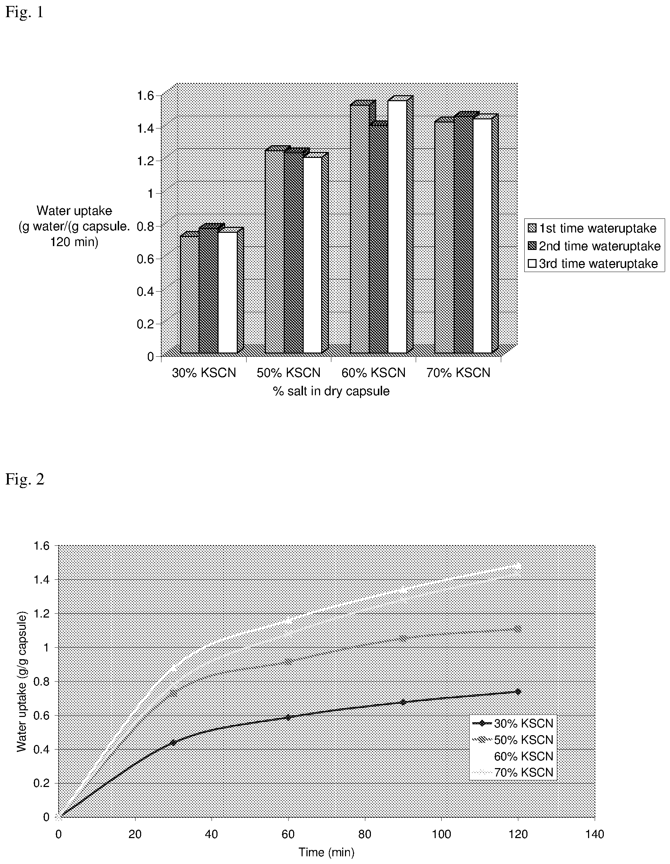

The material has been regenerated and again subjected to the climate chamber; and after that a third time. The result of the water uptake in these three consecutive experiments is shown in Figure 1. It follows from these results that the water uptake after regeneration is nearly the same as before regeneration.

Figure 2 shows the water uptake as a function of time. For the sample with 60% KSCN : 40% ethylcellulose it has been calculated as an average of the three cycles that 1 gram of capsules absorb 1.16 g water in the first hour and 1.49 g water in the total period of two hours. Therefore, for the capsules with 60% KSCN, about 260 g capsules is required to absorb 200 ml g of water per hour.

### Example 3 Preparation of encapsulated salt

A relatively large amount of encapsulated salt has been produced for the proof of principle test. The same chemicals were used as in Examples 1-2. A dispersion with following components was prepared, resulting in a ratio of KSCN/EC=55/45:

| Weight (g) | |
|---|---|
| Ethylcellulose (EC) | 400 |
| Ethanol | 1600 |
| KSCN | 486 |
| water | 600 |

The dispersion was then spray-dried to obtain 550 g powder.

### Example 4 Heating plate

The powder prepared in Example 3 was integrated in a cloth of following components:
- one layer of thin, light polyamide textile (40g/m²)
- on top of this, one layer of polyester nonwoven (35g/m²) was glued (spray glue)
- on and in this non-woven 200 g/m² of powder (as produced in Example 3) was added
- and finally, the Polyimide film (40g/m²) was glued (again with spray glue).

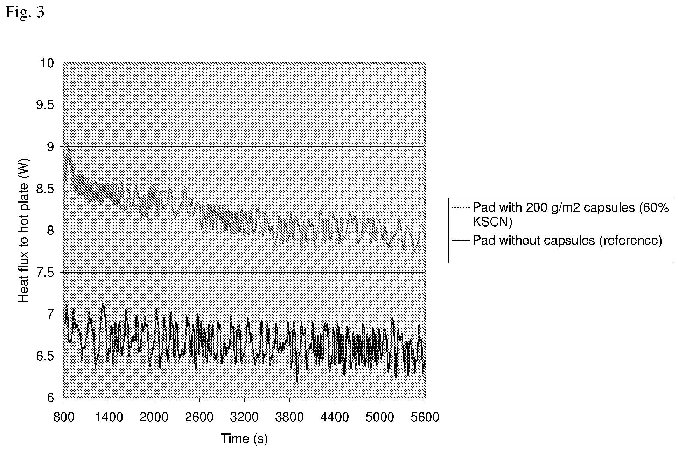

A reference sample is made in the same way, but without adding the encapsulated powder. The result of the test on the heating plate is shown in Table 2 and Figure 3.

**Table 2. Result of the heating plate test.**

| | Reference | Sample with powder |
|---|---|---|
| Weight of powder (g) | 0.0 | 12.5 |
| Weight sample at start (g) | 12.7 | 23.7 |
| Weight sample after 2 hours (g) | 19.8 | 36.4 |
| Total water absorption (g) | 7.1 | 12.7 |
| Water absorption (g) / gram powder | - | 1.02 |

As a result, 12.5 gram of capsules on the surface of one A4 sheet absorbed 12.7 grams of water vapour in 2 hours. This corresponds to 208 g capsules per m² which absorb about 210 grams of water in the first two hours of use. The sample stays dry during the test, meaning that all water stays inside the capsules. In case of the reference sample the water condensed against the PI-layer (the impermeable layer), while the sample with encapsulated salt stays totally dry.

Figure 3 demonstrates that the sample according to the invention requires more heat to keep the plate at 35°C than the reference. This means that the encapsulated salt also has a cooling effect.

The resulting capsules show a water vapour uptake of 1.02 gram water per gram powder in the first two hours of use. Regeneration is possible for at least three times at normal room conditions or in a heated air chamber.

## Claims

1. Water absorbing composition comprising at least one hygroscopic, deliquescent material having a critical relative humidity of 45-97% at 25°C, encapsulated in a matrix of a polymeric material, wherein the polymeric material is cellulose or a cellulose derivative, or wherein the polymeric material is selected from poly(ethyl)methacrylate, polysiloxane (vulcanised), methylcellulose, ethylcellulose, cellulose acetate, cellulose nitrate, poly(oxy-2,6-dimethyl-1,4-phenylene), or a copolymer of these, or a mixture of these.

2. The composition according to claim 1, wherein the polymeric material has a water vapour permeability of at least 1,000 x 10⁻¹³ cm^{3*}cm/(cm^{2*}s^{*}Pa) at 0°C, 1 atm, preferably at least 4,000 x 10⁻¹³ cm^{3*}cm/(cm^{2*}s^{*}Pa) at 0°C, 1 atm.

3. The composition according to any of the preceding claims, wherein the hygroscopic, deliquescent material comprises an inorganic salt or base, or a small molecular weight organic compound.

4. The composition according to any of the preceding claims, wherein the hygroscopic, deliquescent material is an endothermic dissolving compound or a mixture of compounds.

5. The composition according to any one of the preceding claims, wherein the hygroscopic, deliquescent material has a water absorbing capacity of at least 50 wt.% based on the dry weight.

6. The composition according to any one of the preceding claims, wherein the hygroscopic, deliquescent material is selected from calcium nitrate, ammonium nitrate, sodium nitrate, urea, ammonium chloride, ammonium sulphate, diammonium phosphate, potassium chloride, potassium nitrate, mono ammonium phosphate, mono calcium phosphate, potassium sulphate, potassium thiocyanate, ammonium thiocyanate, sodium thiocyanate, or a mixture of these.

7. The composition according to any of the preceding claims, comprising 10-90 wt.% of the hygroscopic, deliquescent material.

8. Method to produce the composition according to any one of claims 1-7, wherein a solution comprising the deliquescent material and a solution comprising the polymeric material are combined and spray-dried.

9. An article comprising the composition of any one of claims 1-7 integrated in a fibrous material.

10. The article according to claim 9, being a personal protection equipment article.

11. Use of the composition according to any one of claims 1-7 to dehumidify the air near human or animal skin.

12. The use according to claim 11, wherein the composition is used in protective clothing to dehumidify the air near human skin.

## Patentansprüche

1. Wasserabsorbierende Zusammensetzung, umfassend mindestens ein hygroskopisches, zerfließendes Material mit einer kritischen relativen Feuchtigkeit von 45-97 % bei 25°C, eingekapselt in eine Matrix eines polymeren Materials, wobei das polymere Material Zellulose oder ein Zellulosederivat ist oder wobei das polymere Material ausgewählt ist aus Poly(ethyl)methacrylat, Polysiloxan (vulkanisiert), Methylzellulose, Ethylzellulose, Zelluloseacetat, Zellulosenitrat, Poly(oxy-2,6-dimethyl-1,4-phenylen) oder einem Copolymer von diesen oder einem Gemisch von diesen.

2. Zusammensetzung nach Anspruch 1, wobei das polymere Material eine Wasserdampfdurchlässigkeit von mindestens 1.000 x 10 ¹³ cm³*cm/(cm²*s*Pa) bei 0°C, 1 atm, bevorzugt mindestens 4.000 x 10¹³ cm³*cm/(cm²*s*Pa) bei 0°C, 1 atm, hat.

3. Zusammensetzung nach einem der vorhergehenden Ansprüche, wobei das hygroskopische, zerfließende Material ein anorganisches Salz oder eine anorganische Base oder eine organische Verbindung mit kleinem Molekulargewicht umfasst.

4. Zusammensetzung nach einem der vorhergehenden Ansprüche, wobei das hygroskopische, zerfließende Material eine endotherme, auflösende Verbindung oder ein Gemisch von Verbindungen ist.

5. Zusammensetzung nach einem der vorhergehenden Ansprüche, wobei das hygroskopische, zerfließende Material eine wasserabsorbierende Kapazität von mindestens 50 Gew.-%, basierend auf dem Trockengewicht, hat.

6. Zusammensetzung nach einem der vorhergehenden Ansprüche, wobei das hygroskopische, zerfließende Material ausgewählt ist aus Kalziumnitrat, Ammoniumnitrat, Natriumnitrat, Harnstoff, Ammoniumchlorid, Ammoniumsulfat, Diammoniumphosphat, Kaliumchlorid, Kaliumnitrat, Monoammoniumphosphat, Monokalziumphosphat, Kaliumsulfat, Kaliumthiocyanat, Ammoniumthiocyanat, Natriumthiocyanat oder einem Gemisch von diesen.

7. Zusammensetzung nach einem der vorhergehenden Ansprüche, umfassend 10-90 Gew.-% des hygroskopischen, zerfließenden Materials.

8. Verfahren zur Herstellung der Zusammensetzung nach einem der Ansprüche 1-7, wobei eine Lösung, umfassend das zerfließende Material, und eine Lösung, umfassend das polymere Material, kombiniert und sprühgetrocknet werden.

9. Artikel, umfassend die Zusammensetzung nach einem der Ansprüche 1-7, integriert in ein faserige Material.

10. Artikel nach Anspruch 9, welcher ein persönlicher Schutzausrüstungsartikel ist.

11. Verwendung der Zusammensetzung nach einem der Ansprüche 1-7 zur Entfeuchtung der Luft nahe menschlicher oder tierischer Haut.

12. Verwendung nach Anspruch 11, wobei die Zusammensetzung in Schutzkleidung verwendet wird, um die Luft nahe menschlicher Haut zu entfeuchten.

## Revendications

1. Composition absorbant l'eau comprenant au moins une matière déliquescente hygroscopique ayant une humidité relative critique de 45-97% à 25° C, encapsulée dans une matrice d'un matériau polymère, dans laquelle le matériau polymère est de la cellulose ou un dérivé de cellulose ou dans laquelle le matériau polymère est choisi parmi le poly(éthyl)méthacrylate, le polysiloxane (vulcanisé), la méthylcellulose, l'éthylcellulose, l'acétate de cellulose, le nitrate de cellulose, le poly(oxy-2,6-diméthyl-1,4-phénylène) ou un de leurs copolymères ou un mélange de ceux-ci.

2. La composition selon la revendication 1, dans laquelle le matériau polymère présente une perméabilité à la vapeur d'eau
d'au moins 1000 x 10⁻¹³ cm^{3*}cm/(cm^{2*}s^{*}Pa) à 0°C, 1 atm de préférence au moins 4000 x 10⁻¹³ cm^{3*}cm/(cm^{2*}s^{*}Pa) à 0°C, 1 atm.

3. La composition selon l'une quelconque des revendications précédentes, dans laquelle la matière déliquescente hygroscopique comprend un sel ou une base inorganique, ou un composé organique de faible poids moléculaire.

4. La composition selon l'une quelconque des revendications précédentes, dans laquelle la matière déliquescente hygroscopique est un composé dissolvant endothermique ou un mélange de composés.

5. La composition selon l'une quelconque des revendications précédentes, dans laquelle la matière déliquescente hygroscopique a une capacité d'absorption d'eau d'au moins 50% en poids par rapport au poids sec.

6. La composition selon l'une quelconque des revendications précédentes, dans laquelle la matière déliquescente hygroscopique est choisi parmi le nitrate de calcium, le nitrate d'ammonium, le nitrate de sodium, l'urée, le chlorure d'ammonium, le sulfate d'ammonium, le phosphate de diammonium, le chlorure de potassium, le nitrate de potassium, le monophosphate d'ammonium, le monophosphate de calcium, le sulfate de potassium, le thiocyanate de potassium, le thiocyanate d'ammonium, le thiocyanate de sodium, ou un mélange de ceux-ci.

7. La composition selon l'une quelconque des revendications précédentes, comprenant de 10 à 90% en poids de la matière déliquescente hygroscopique.

8. Le procédé pour produire la composition selon l'une quelconque des revendications 1-7, dans lequel une solution comprenant de la matière déliquescente et une solution comprenant le matériau polymère sont combinées et séchées par pulvérisation.

9. Un article comprenant la composition selon l'une quelconque des revendications 1-7 intégrée dans un matériau fibreux.

10. L'article selon la revendication 9, consistant en un article d'équipement pour protection individuelle.

11. L'utilisation de la composition selon l'une quelconque des revendications 1-7, pour déshumidifier l'air à proximité de la peau humaine ou de la peau animale.

12. L'utilisation selon la revendication 11, dans laquelle la composition est utilisée dans des vêtements de protection pour déshumidifier l'air à proximité de la peau humaine.
